(19) Europäisches Patentamt
European Patent Office
Office européen des brevets

(11) Publication number: **0 489 485 A1**

(12) **EUROPEAN PATENT APPLICATION**

(21) Application number: **91308331.7**

(22) Date of filing: **12.09.91**

(51) Int. Cl.[5]: **C08J 5/12**

(30) Priority: **04.12.90 US 622077**

(43) Date of publication of application: **10.06.92 Bulletin 92/24**

(84) Designated Contracting States: **DE FR GB**

(71) Applicant: **TEXACO CHEMICAL COMPANY**
**3040 Post Oak Boulevard**
**Houston, Texas 77056(US)**

(72) Inventor: **Marquis, Edward Thomas**
**9004 Collinfield Drive**
**Austin, Texas 78758(US)**
Inventor: **Cusurida, Michael**
**3543 Greystone, Suite 1056**
**Austin, Texas 78727(US)**

(74) Representative: **Brock, Peter William et al**
**UROUHART-DYKES & LORD 91 Wimpole Street**
**London W1M 8AH(GB)**

(54) **A process for welding plastics.**

(57) Plastics materials can conveniently be welded together by applying an alkylene carbonate (preferably ethylene carbonate or propylene carbonate) to one portion, and then contacting the second portion with the area that had been wetted or softened by the alkylene carbonate.

The alkylene carbonate can be employed either in pure form, or as a mixture with a co-solvent, such as aromatic hydrocarbons, ketones, esters, ethers, glycol ethers, imidazoles tetramethyl urea, N,N'-dimethyl ethylene urea, 1,1,1- trichloroethane, and N-methyl pyrrolidone.

EP 0 489 485 A1

The invention relates to processes for welding plastics.

A variety of methods has been used to weld plastics pieces together. One method (see, for example, US-A-4439263) involves heating the edges of two pieces of thermoplastics material, and then forcing the heated portions against one another to form a weld between the two pieces. Another method (see US-A-4457795) involves spinning two rotatable plastic tubes in telescoping relation to one another, whereby the frictional heat generated by rotating one tube relative to the other softens the plastic at the interface, allowing the tubes to weld together when rotation is stopped.

In some applications, it is not desirable or convenient to employ a method requiring heat to form a weld between the pieces of plastic. G A F Corporation's Handbook on N-methyl-2-pyrrolidone (M-PYROL$^{R}$, N-Methyl-2-Pyrrolidone HANDBOOK, G A F Corporation, Chemical Division, chapter 5, p. 47.) notes that plastics materials may be fused without application of heat by using N-methyl pyrrolidone to etch and soften the surface of the pieces to be joined, followed by pressing the pieces together to form a bond. However, N-methyl pyrrolidone is not an inexpensive solvent, and it would be a significant improvement in the art if a welding agent were available that avoided the need for heat or cements, and yet was economically attractive as well.

We have surprisingly, discovered, that a variety of weldable plastics may be joined using an alkylene carbonate-containing welding agent. Alkylene carbonates are commercially available, present few environmental or health concerns, and are relatively inexpensive. While alkylene carbonates have been used to plasticize certain polymers (see US-A-4775708) they were not known to be effective for welding plastics.

The invention concerns a process for welding plastics, comprising contacting a first piece of weldable plastic with alkylene carbonate; and contacting a second piece of weldable plastic with that point at which the first piece was contacted with alkylene carbonate. In another embodiment of the invention, the welding agent comprises a mixture of the alkylene carbonate and at least co-solvent selected from aromatic hydrocarbons, ketones, esters, ethers, glycol ethers, imidazoles, tetramethyl urea, N, N'-dimethyl ethylene urea, and N-methyl pyrrolidone. Preferred co-solvents include N-methyl pyrrolidone, 1,1, 1-trichloroethane, propylene glycol methyl ether, dibasic ester, methyl iso-amyl ketone, toluene, and hexyl acetate.

Alkylene carbonates useful according to the present invention may be represented by the following formula:

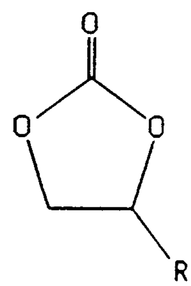

where R is hydrogen or alkyl having 1 to 20 carbon atoms. Preferably R is hydrogen or methyl, i.e. the alkylene carbonate is ethylene carbonate or propylene carbonate. Because propylene carbonate degrades to propylene glycol, a substance of very nominal toxicity, propylene carbonate is preferred. Ethylene carbonate and propylene carbonate are commercially available from Texaco Chemical Co. as Texacar$^{R}$ EC Ethylene Carbonate and Texacar$^{R}$ PC Propylene Carbonate, respectively. Alternatively, a mixture of alkylene carbonates may be used, preferably a mixture of ethylene carbonate and propylene carbonate, such as, Texacar$^{R}$ EC-50.

Solvents that may be used as co-solvents with alkylene carbonates according to the present invention include aromatic hydrocarbons, ketones, esters, ethers, glycol ethers, imidazoles, tetramethyl urea, N,N'-dimethyl ethylene urea, 1,1,1-trichloroethane, and N-methyl pyrrolidone. For example, good results are obtained using formulations containing an alkylene carbonate and one or more of the following solvents: N-methyl pyrrolidone, 1,1,1-trichloroethane, propylene glycol methyl ether, propylene glycol t-butyl ether, propylene glycol butyl ether, dibasic ether, methyl iso-amyl ketone, ethyl lactate, toluene, hexyl acetate, ethylene glycol diacetate, propylene glycol diacetate, and diisobutyl ketone. If a non-alkylene carbonate co-solvent is used with the alkylene carbonate, it is preferred that the non-alkylene carbonate solvent is selected from N-methyl pyrrolidone, 1,1,1-trichloroethane, propylene glycol methyl ether, dibasic ester, methyl iso-amyl ketone, toluene, and hexyl acetate. It is more preferred that the co-solvent is N-methyl pyrrolidone, methyl iso-amyl ketone, toluene, or hexyl acetate. Optionally, other solvents may be added to

the formulations of the present invention as well. We have demonstrated the use of several different formulations in the examples that follow.

Optionally, other additives may be employed in the formulations used according to the present invention. For example, suitable thickeners may be included, such as ethylcellulose, hydroxypropyl cellulose, organic modified clay and hydrogenated castor oil.

Examples of plastics suitable for welding according to the present invention include polyvinyl chloride, vinyl polymers, polycarbonate, styrene, acrylic, acrylonitrile-butadienestyrene copolymers, and the like.

The process according to the invention is effective at temperatures of up to 100 °C and at pressures of up to 10 MPa. The alkylene carbonate-containing welding agent may be applied to the plastic in any conventional manner. Typically, the alkylene carbonate-containing welding agent may be applied drop-wise or by brush or spray to a piece of weldable plastic, and a second piece of weldable plastic may then be contacted with the first piece of plastic, at the point at which the first piece has been etched or softened by the welding agent. Preferably, pressure is then applied to press the two pieces together as the weld hardens.

The invention will be further illustrated by the following Examples.

## Examples

In the Examples recorded in the table below, the following procedure was used. The various plastics used in the examples below were purchased and cut into strips 1/2 inch (13mm) wide and 1/8 inch (3mm) thick. One or two drops of each welding agent formulation tested were then placed on a separate sample of each type of plastic. Immediately, a second piece of the respective plastic was then placed on each strip to which a welding agent had been applied, and the two pieces were pressed together. The strength of each weld was later observed and recorded. The procedure described above was performed at room temperature.

In the Table below, the results obtained using Texacar EC-50 alone and PC alone (recorded in Ex. 1) are re-recorded in Examples 2 to 9 for easier comparison with data obtained using various co-solvents, alone or in a formulation with Texacar EC-50 or PC. Surprisingly, with certain plastics, it was observed that a formulation containing both an alkylene carbonate and a co-solvent selected from the group tested often formed a very good weld (VGW), whereas a weaker weld or no weld was observed using either the alkylene carbonate alone or the co-solvent alone.

Solvent Welding of Plastics with Carbonates and Carbonate-Containing Welding Agents

| Ex. No. | Welding Agent Components[(1)] | PVC | Vinyl | Lexan® GE Polycarbonate | Hi Impact Styrene | Acrylic | Natural ABS |
|---|---|---|---|---|---|---|---|
| 1 | EC-50 | NW | NW | NW | NW | VGW | VGW |
| | PC | NW | NW | NW | NW | VGW | VGW |
| | EC-50/NMP | VGW | GW | VGW | GW | VGW | VGW |
| | PC/NMP | VGW | VGW | VGW | VGW | VGW | VGW |
| 2 | EC-50 | NW | NW | NW | NW | VGW | VGW |
| | PC | NW | NW | NW | NW | VGW | VGW |
| | EC-50/1,1,1-Trichloroethane | NW | NW | VGW | NW | VGW | VGW |
| | PC/1,1,1-Trichloroethane | FW | GW | VGW | NW | VGW | VGW |
| 3 | EC-50 | NW | NW | NW | NW | VGW | VGW |
| | PC | NW | NW | NW | NW | VGW | VGW |
| | EC-50/PM | NW | NW | VGW | NW | VGW | VGW |
| | PC/PM | NW | NW | NW | NW | VGW | VGW |
| | PM | NW | NW | NW | NW | VGW | NW |
| 4 | EC-50 | NW | NW | NW | NW | VGW | VGW |
| | PC | NW | NW | NW | NW | VGW | VGW |
| | EC-50/PTB | NW | NW | NW | NW | VGW | VGW |
| | PC/PTB | NW | NW | NW | NW | VGW | VGW |
| | PTB | NW | NW | NW | NW | NW | NW |
| 5 | EC-50 | NW | NW | NW | NW | VGW | VGW |
| | PC | NW | NW | NW | NW | VGW | VGW |
| | EC-50/DBE | NW | NW | VGW | NW | VGW | VGW |
| | PC/DBE | NW | NW | VGW | NW | VGW | VGW |
| | DBE | NW | NW | VGW | VGW | VGW | VGW |
| 6 | EC-50 | NW | NW | NW | NW | VGW | VGW |
| | PC | NW | NW | NW | NW | VGW | VGW |
| | EC-50/MIAK | VGW | GW | VGW | GW | VGW | VGW |
| | PC/MIAK | VGW | GW | VGW | GW | VGW | VGW |
| | MIAK | VGW | VGW | NW | VGW | VGW | VGW |

(1) Co-solvents were blended in a 1:1 weight ratio.

NW = No weld; FW = Fair weld; GW = Good weld; and VGW = Very good weld.

PVC = Polyvinyl chloride; ABS = Acrylonitrile butadiene styrene; EC = Texacar® Ethylene carbonate; PC = Texacar® Propylene carbonate; EC-50 = 50/50 by weight blend of Texacar® EC and PC; DBE = Dibasic ester (Du Pont); MIAK = Methyl iso-amyl ketone; PM = Propylene glycol methyl ether; NMP = N-methyl pyrrolidone; and PTB = Propylene glycol t-butyl ether.

| Ex. No. | Welding Agent Components(1) | PVC | Vinyl | Lexan• GE Polycarbonate | Hi Impact Styrene | Acrylic | Natural ABS |
|---|---|---|---|---|---|---|---|
| 7 | EC-50 | NW | NW | NW | NW | VGW | VGW |
| | PC | NW | NW | NW | NW | VGW | VGW |
| | EC-50/Ethyl lactate | NW | NW | NW | NW | VGW | VGW |
| | PC/Ethyl lactate | NW | NW | NW | NW | VGW | VGW |
| | Ethyl lactate | NW | NW | NW | NW | VGW | VGW |
| 8 | EC-50 | NW | NW | NW | NW | VGW | VGW |
| | PC | NW | NW | NW | NW | VGW | VGW |
| | EC-50/Toluene | VGW | GW | VGW | VGW | VGW | VGW |
| | PC/Toluene | VGW | GW | VGW | VGW | VGW | VGW |
| | Toluene | NW | NW | GW | VGW | VGW | VGW |
| 9 | EC-50 | NW | NW | NW | NW | VGW | VGW |
| | PC | NW | NW | NW | NW | VGW | VGW |
| | EC-50/Exxate 600 | VGW | GW | VGW | VGW | VGW | VGW |
| | PC/Exxate 600 | VGW | GW | VGW | VGW | VGW | VGW |
| | Exxate 600 | NW | NW | NW | VGW | NW | NW |
| 10 | EC/EGDA | NW | NW | NW | NW | VGW | VGW |
| 11 | PC | NW | NW | NW | NW | VGW | VGW |
| | PC/PGDA | NW | NW | VGW | NW | VGW | VGW |
| 12 | PC/PM/DBE/MIAK | VGW | GW | VGW | VGW | VGW | VGW |
| | PC/PB/PGDA/DIBK | GW | GW | GW | VGW | VGW | VGW |
| 13 | 1-isopropyl-2-methyl-imidazole | VGW | VGW | NW | VGW | VGW | VGW |
| 14 | Tetramethyl urea | VGW | VGW | VGW | VGW | VGW | VGW |

(1) Co-solvents were blended in a 1:1 weight ratio.
NW = No weld; FW = Fair weld; GW = Good weld; and VGW = Very good weld.

PVC = Polyvinyl chloride; ABS = Acrylonitrile butadiene styrene; EC = Texacar• Ethylene carbonate; PC = Texacar• Propylene carbonate; EC-50 = 50/50 by weight blend of Texacar• EC and PC; Exxate 600 = Exxon's hexyl acetates; DBE= Dibasic ester (Du Pont); MIAK = Methyl iso-amyl ketone; PM = Propylene glycol methyl ether; EGDA = Ethylene glycol diacetate; PGDA = Propylene glycol diacetate; PB = Propylene glycol butyl ether; and DIBK = Diisobutyl ketone.

## Claims

1. A process for welding plastics by contacting a first piece of weldable plastic with a solvent and contacting a second piece of weldable plastic with that portion of the first piece which was contacted with the solvent characterized in that the solvent comprises an alkylene carbonate.

2. A process according to Claim 1 characterized in that the alkylene carbonate has the formula:

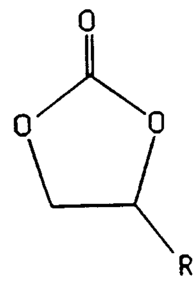

wherein R is hydrogen or alkyl having 1 to 20 carbon atoms.

3. A process according to Claim 1 or 2 characterized in that the alkylene carbonate is propylene carbonate.

4. A process according to Claim 1 or 2 characterized in that the alkylene carbonate is ethylene carbonate.

5. A process according to Claim 1 or 2 characterized in that the alkylene carbonate is a mixture of propylene carbonate and ethylene carbonate.

6. A process according to any one of Claims 1 to 5 characterized in that the weldable plastic is an acrylic or acrylonitrile/butadiene/styrene polymer.

7. A process according to any one of claims 1 to 5 characterized in that the alkylene carbonate solvent is used in admixture with at least one co-solvent selected from aromatic hydrocarbons, ketones, esters, ethers, glycol ethers, imidazoles tetramethyl urea, N,N'-dimethyl ethylene urea, 1,1,1- trichloroethane, and N-methyl pyrrolidone.

8. A process according to Claim 7 characterized in that the co-solvent is N-methyl pyrrolidone, 1,1,1-trichloroethane, propylene glycol methyl ether, propylene glycol t-butyl ether, propylene glycol butyl ether, dibasic ester, methyl iso-amyl ketone, ethyl lactate, toluene, hexyl acetate, ethylene glycol diacetate, propylene glycol diacetate, or diisobutyl ketone.

9. A process according to Claim 7 or 8 characterized in that the weldable plastic is a vinyl chloride, vinyl, polycarbonate, styrene, acrylic, or acrylonitrile/butadiene/styrene polymer.

European Patent Office

# EUROPEAN SEARCH REPORT

Application Number

EP 91 30 8331

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 256 524 (J.B. HARE)<br>* Claims 1-5 *<br>--- | 1-6 | C 08 J 5/12 |
| X | GB-A-1 582 500 (MONSANTO CO.)<br>* Claims 1-3,6,12,15,16; examples 1,2; page 2, lines 21-28 *<br>----- | 1-6 | |
| | | | **TECHNICAL FIELDS SEARCHED (Int. Cl.5)** |
| | | | C 08 J |

The present search report has been drawn up for all claims

| Place of search | Date of completion of the search | Examiner |
|---|---|---|
| THE HAGUE | 02-03-1992 | NIAOUNAKIS M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document